# EUROPEAN PATENT SPECIFICATION

(11) **EP 1 818 535 B1**
(45) Date of publication and mention of the grant of the patent: **17.09.2008**
(21) Application number: 06002620.0
(22) Date of filing: 08.02.2006
(51) Int. Cl.: F02M 61/14, F02M 55/00, F02M 61/16

(54) **Coupling device for connecting an injector to a fluid supply**
Verbindungsanordnung zum Verbinden eines Injektors mit einer Fluid-Versorgung
Dispositif de raccordement pour raccorder un injecteur à un alimentation de fluide

(43) Date of publication of application: 15.08.2007
(73) Proprietor: SIEMENS AKTIENGESELLSCHAFT, 80333 München (DE)
(72) Inventor: Ricci, Roberto, 57121 Livorno (IT); Viggiani, Domenico, deceased (IT)

(56) References cited:
- EP-A- 0 969 203
- EP-A- 1 150 002
- WO-A-03/006818
- FR-A- 2 012 144
- US-A1- 2004 124 276
- US-B1- 6 431 151

## Description

The invention relates to a coupling device for connecting an injector to a fluid supply. The coupling device comprises a pipe which communicates with the fluid supply. Further, the coupling device comprises a connector. The connector comprises a pipe section which is arranged in the pipe.

EP 0 969 203 A1 discloses a coupling system between an engine head, an injector, and a fuel manifold. In the fuel manifold, the engine head has a seating designed to house the injector. The fuel manifold extends above the engine head and is connected to the injector through a bush rejecting from the fuel manifold. The injector is coupled to the seating by means of a ball coupling. The fuel manifold is rigidly secured to the head of the engine. An opposing spring is interposed between the fuel manifold and the injector to compress the injector inside the seat.

A coupling system with a connector between the fluid supply and the injector is known from US-B-6 431 151.

The object of the invention is to create a coupling device for connecting an injector to a fluid supply which enables a proper flexible coupling of the injector to the fluid supply.

The object is achieved by the independent claim 1. Advantageous embodiments of the invention are given in the subclaims.

The invention is distinguished by a coupling device for connecting an injector to a fluid supply. The coupling device comprises a pipe and a connector. The pipe communicates with the fluid supply and has a convex end face. The connector has a pipe section, a middle section, and an injector section for connecting the connector to the injector. The pipe section is arranged in the pipe. The injector section is arranged facing away from the pipe section. The middle section has a concave surface which forms a sphere-sphere coupling with the convex end face of the fluid supply.

The sphere-sphere coupling enables a tilting of the connector relative to an axis of the pipe without losing the contact between the concave surface of the connector and the convex end face of the pipe. This enables a tilting of the injector relative to the axis of the pipe. Further, this enables to connect the injector to the fluid supply if the injector is not quite in its correct position relative to the pipe, especially, if an axis of a fluid inlet of the injector is shifted relative to an axis of the pipe. This contributes to a proper flexible coupling of the injector to the pipe and via the pipe to the fluid supply.

In an advantageous embodiment of the coupling device, the coupling device comprises a mounting device which is fixed to the pipe and which is axially coupled to the middle section. In that way, the middle section is axially pressed against the convex end face of the pipe by the mounting device. This contributes to the proper coupling of the injector to the pipe.

In a further advantageous embodiment of the coupling device, the mounting device comprises a coupling body. The coupling body has a side portion and a bottom portion. The side portion has a recess for taking in the middle section of the connector and for taking in the convex end face of the pipe. The bottom portion has a recess through which the injector section of the connector protrudes. This enables to press the middle section of the connector against the spherical end face of the pipe in an easy way.

In a further advantageous embodiment of the coupling device, the coupling body comprises a coupling nut. The pipe has a corresponding thread for the coupling nut. The coupling nut is screwed onto the pipe at the thread of the pipe. This enables to press the middle section against the spherical end face in a very easy way.

In a further advantageous embodiment of the coupling device, the mounting device comprises an elastic body. The elastic body is axially coupled to the bottom portion of the coupling body at a first axial end of the elastic body. Further, the elastic body is axially coupled to the middle section of the connector at a second axial end of the elastic body. This contributes to the proper flexible coupling of the injector to the pipe.

In a further advantageous embodiment of the coupling device, the elastic body comprises a spring. This enables the proper flexible coupling in an easy way.

In a further advantageous embodiment, the coupling device comprises a tube. The tube takes in an axial section of the coupling body and an axial section of the pipe. Further, the tube is coupled to the coupling body and/or to the axial section of the pipe by a press fit. This contributes to a proper coupling of the cup-shaped mounting body.

In a further advantageous embodiment of the coupling device, the pipe has a circumferential groove. This may contribute to a proper fixation of the tube.

In a further advantageous embodiment of the coupling device, the pipe section and/or the injector section comprise an O-ring seal. The O-ring seal is arranged in a diminution of the pipe section and/or, respectively, the O-ring seal is arranged in a diminution of the injector section. This contributes to a proper sealed coupling of the connector to the pipe and/or, respectively, to the injector.

In a further advantageous embodiment of the coupling device, the pipe has an inner diameter which increases towards the convex end face. This contributes to a wide flexibility of the coupling device.

The invention is explained in the following with the help of schematic drawings.

These are as follows:
- Figure 1: an injector and a fluid supply,
- Figure 2: a cut through the fluid supply according to figure 1 and a connector,
- Figure 3: the fluid supply and the connector according to figure 2 and a coupling nut.

Elements with the same design or function that appear in the different illustrations are identified by the same reference characters.

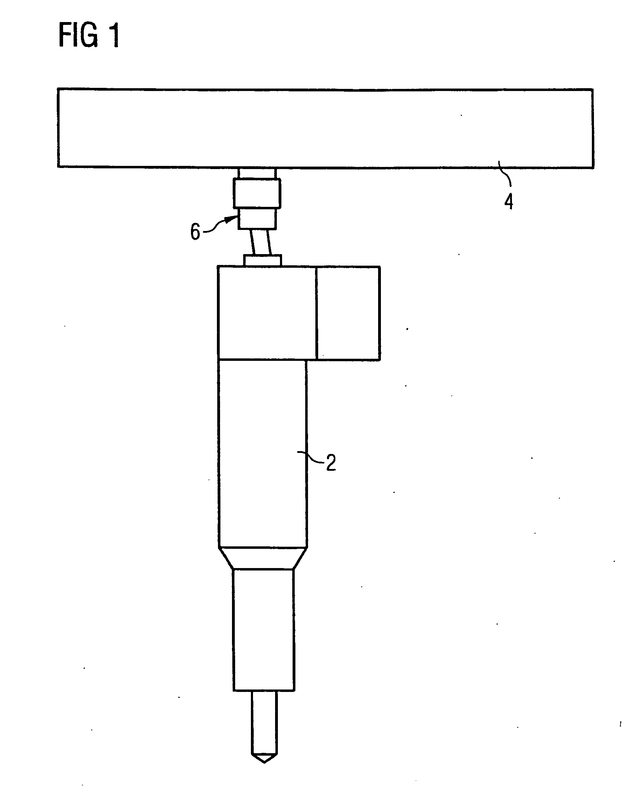

An injector 2 (figure 1) is connected to a fluid supply 4 by a coupling device 6. The injector is suited for injecting fluid. Preferably, the injector 2 is used for injecting fuel into a combustion chamber of an internal combustion engine.

Because of system tolerances of the internal combustion engine the position of the injector 2 relative to the fluid supply 4 may be not quite correct. The coupling device 6 enables to compensate such system tolerances. For example, the system tolerances may relate to a position of the fluid supply 4 and/or to the position of the pipe at the fluid supply and/or to dimensions of the fluid supply and/or the pipe and/or to a cylinder head of the internal combustion engine in which the injector 2 is arranged.

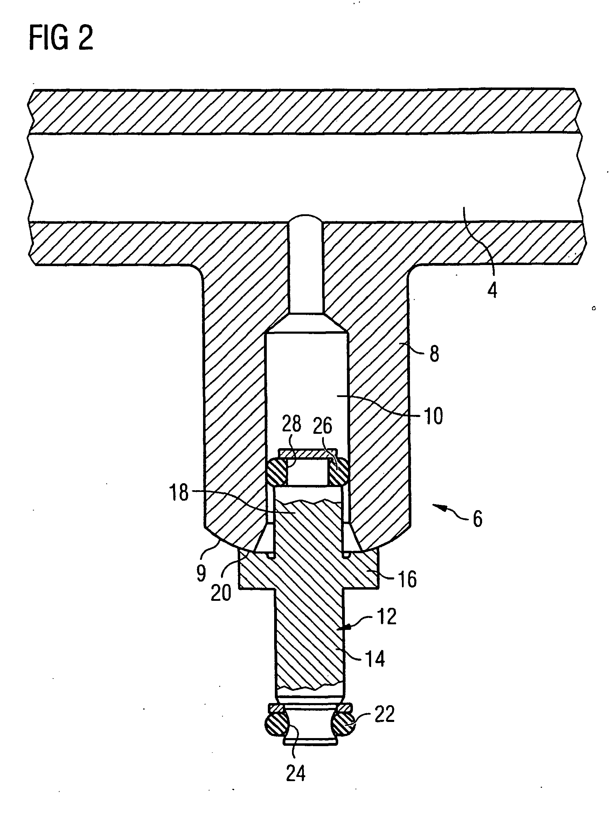

A pipe 8 (figure 2) is connected to the fluid supply 4. Preferably, an axis of the fluid supply is rectangular to an axis of the pipe 8. The pipe 8 has a convex end face 9. A diameter of a recess 10 of the pipe 8 increases towards the convex end face 9.

A connector 12 comprises an injector section 14, a middle section 16, and a pipe section 18. The pipe section 18 is arranged in the recess 10 of the pipe 8. The middle section 16 is formed by a step of the connector 12. The step of the connector 12 comprises a concave surface facing towards the convex end face 9 of the pipe 8. The connector 12 and the pipe 8, especially the concave surface of the middle section 16 of the connector 12 and the convex end face 9 of the pipe 8 form a sphere-sphere coupling in a coupling are 20.

The sphere-sphere coupling enables a tilting of the connector 12 relative to the axis of the pipe 8 without losing the contact of the connector 12 and the pipe 8 in the coupling area 20. The increasing diameter of the recess 10 of the pipe contributes to a wide range in which the connector 12 may be tilted. The tilting of the connector 12 enables to connect the injector 2 to the pipe 8 even if the injector 2 and/or the fluid supply 4 is not quite in its correct position, especially, if an axis of an fluid inlet of the injector 2 is shifted relative to the axis of the pipe 8. Further, the tilting of the connector 12 enables to connect the injector 2 to the pipe 8 even if the axis of the fluid inlet of the injector 2 is tilted relative to the axis of the pipe 8.

Preferably, the pipe section 18 and the injector section 14 of the connector 12 comprise a diminution 28 of the pipe section 18 and, respectively, a diminution 24 of the injector section 14. An O-ring seal 26 of the pipe section 18 and an O-ring seal 22 of the injector section 14 are arranged in the diminution 28 of the pipe section and, respectively, in the diminution 24 of the injector section. The O-ring seal 26, 24 of the pipe section 18 and, respectively, of the injector section 14 contribute to a proper sealing between the connector 12 and the pipe 8 and, respectively, to a proper sealing between the connector 12 and the injector 2.

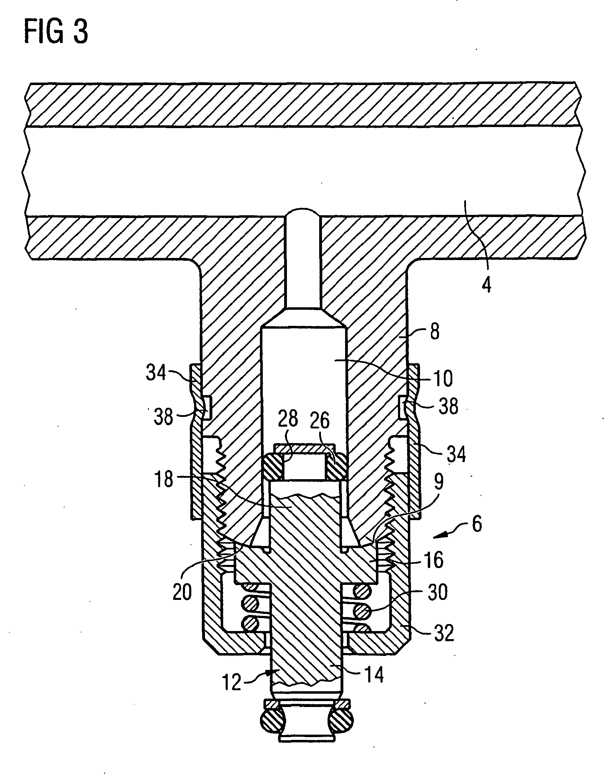

Additionally, there may be arranged a coupling nut 32 (figure 3). The coupling nut 32 has a recess of the coupling nut in a bottom portion of the coupling nut. The injector section 14 of the connector 12 protrudes through the recess of the bottom portion of the coupling nut 32. The coupling nut 32 is screwed onto a corresponding thread at the pipe 8. In that way, a proper contact between the pipe 8 and the connector 12 in the coupling area 20 is secured. To give the connector 12 the possibility of tilting relative to the axis of the pipe 8, an elastic body, which for example comprises a spring 30 and/or a rubber, is arranged intermediate the bottom portion of the coupling nut 32 and the middle section 16 of the connector 12. The elastic body contributes to a proper sealing in the coupling area while enabling the tilting of the connector 12.

Additionally, there may be arranged a tube 34 at the outside of the coupling device 6. The tube 34 takes in an axial section of the coupling nut 32 and an axial section of the pipe 8. The tube 34 may comprise aluminum or stainless steel.

After screwing the coupling nut 32 onto the pipe 8, the tube 34 may be sticked onto the coupling nut 32 and the pipe 8. Preferably, the tube 34 is fixed to the pipe 8 and to the coupling nut 32 by a press fit. If the tube 34 is fixed to the pipe 8 by a press fit, there may be formed a circumferential groove 38 at the pipe 8 in which the tube 34 may be crimped into the groove 38.

## Claims

1. Coupling device (6) for connecting an injector (2) to a fluid supply (4) comprising
- a pipe (8) which communicates with the fluid supply (4) and which has a convex end face (9),
- a connector (12) which has a pipe section (18), a middle section (16), and an injector section (14) for connecting the connector (12) to the injector (2), with the pipe section (18) being arranged in the pipe (8), with the injector section (14) facing away from the pipe section (18), and with the middle section (16) having a concave surface which forms a sphere-sphere coupling with the convex end face (9) of the fluid supply (4).

2. Coupling device (6) in accordance with claim 1 comprising a mounting device which is fixed to the pipe (8) and which is axially coupled to the middle section (16) and in that way the middle section (16) is axially pressed against the convex end face (9) of the pipe (8) by the mounting device.

3. Coupling device (6) in accordance with claim 2 with the mounting device comprising a coupling body having a side portion and a bottom portion and with the side portion having a recess for taking in the middle section (16) of the connector (12) and the convex end face (9) of the pipe (8) and with the bottom portion having a recess through which the injector section (14) of the connector (12) protrudes.

4. Coupling device (6) in accordance with claim 3 with the coupling body comprising a coupling nut (32) and with the pipe (8) having a corresponding thread for the coupling nut (32) and with the coupling nut (32) being screwed onto the pipe (8) at the thread of the pipe (8).

5. Coupling device (6) in accordance with one of the claims 2 to 4 with the mounting device comprising an elastic body which is axially coupled to the bottom portion of the coupling body at a first axial end of the elastic body and which is axially coupled to the middle section (16) of the connector (12) at a second axial end of the elastic body.

6. Coupling device (6) in accordance with claim 5 with the elastic body comprising a spring (30).

7. Coupling device (6) in accordance with one of the claims 3 to 6 comprising a tube (34) which takes in an axial section of the coupling body and an axial section of the pipe (8) and which is coupled to the coupling body and the axial section of the pipe (8) by a press fit.

8. Coupling device (6) in accordance with one of the preceding claims with the pipe (8) having a circumferential groove (38).

9. Coupling device (6) in accordance with one of the preceding claims with the pipe section (18) and/or the injector section (14) comprising an O-ring seal (26, 22) which is arranged in a diminution (28) of the pipe section (18) and/or, respectively, which is arranged in a diminution (24) of the injector section (14).

10. Coupling device (6) in accordance with one of the preceding claims with the pipe (8) having an inner diameter which increases towards the convex end face (9).

## Patentansprüche

1. Verbindungsvorrichtung (6) zum Verbinden eines Injektors (2) mit einer Fluidversorgung (4), umfassend
- eine Leitung (8), die mit der Fluidversorgung (4) in Verbindung steht und die eine konvexe Endfläche (9) aufweist,
- ein Anschlussstück (12), das einen Leitungsabschnitt (18), einen Mittelabschnitt (16) und einen Injektorabschnitt (14) zum Verbinden des Anschlussstücks (12) mit dem Injektor (2) aufweist,
während der Leitungsabschnitt (18) innerhalb der Leitung (8) angeordnet ist, der Injektorabschnitt (14) von dem Leitungsabschnitt (18) weg weist und der Mittelabschnitt (16) eine konkave Oberfläche aufweist, die eine Oberflächen-Oberflächen-Kupplung mit der konvexen Endfläche (9) der Fluidversorgung (4) bildet.

2. Verbindungsvorrichtung (6) gemäß Anspruch 1, umfassend eine Befestigungsvorrichtung, die an der Leitung (8) befestigt ist und die axial mit dem Mittelabschnitt (16) verbunden ist, und auf diese Art und Weise wird der Mittelabschnitt (16) durch die Befestigungsvorrichtung axial gegen die konvexe Endfläche (9) der Leitung (8) gepresst.

3. Verbindungsvorrichtung (6) gemäß Anspruch 2, in der die Befestigungsvorrichtung ein Kupplungsgehäuse mit einem Seitenteil und einem Bodenteil umfasst, während das Seitenteil eine Aussparung zum Aufnehmen des Mittelabschnitts (16) des Anschlussstücks (12) und der konvexen Endfläche (9) der Leitung (8) aufweist und das Bodenteil eine Aussparung aufweist, durch die der Injektorabschnitt (14) des Anschlussstücks (12) vorsteht.

4. Verbindungsvorrichtung (6) gemäß Anspruch 3, in der das Kupplungsgehäuse eine Kupplungsmutter (32) umfasst, während die Leitung (8) ein entsprechendes Gewinde für die Kupplungsmutter (32) aufweist und die Kupplungsmutter (32) auf die Leitung (8) am Gewinde der Leitung (8) geschraubt ist.

5. Verbindungsvorrichtung (6) gemäß einem der Ansprüche 2 bis 4, in der die Befestigungsvorrichtung einen elastischen Körper umfasst, der axial mit dem Bodenteil des Kupplungsgehäuses an einem ersten axialen Ende des elastischen Körpers verbunden ist und der axial mit dem Mittelabschnitt (16) des Anschlussstücks (12) an einem zweiten axialen Ende des elastischen Körpers verbunden ist.

6. Verbindungsvorrichtung (6) gemäß Anspruch 5, in der der elastische Körper eine Feder (30) umfasst.

7. Verbindungsvorrichtung (6) gemäß einem der Ansprüche 3 bis 6, umfassend ein Rohr (34), das einen axialen Abschnitt des Kupplungsgehäuses und einen axialen Abschnitt der Leitung (8) aufnimmt und das mit dem Kupplungsgehäuse und dem axialen Abschnitt der Leitung (8) durch eine Presspassung verbunden ist.

8. Verbindungsvorrichtung (6) gemäß einem der vorhergehenden Ansprüche, in der die Leitung (8) eine Umfangsrille (38) aufweist.

9. Verbindungsvorrichtung (6) gemäß einem der vorhergehenden Ansprüche, in der der Leitungsabschnitt (18) und/oder der Injektorabschnitt (14) eine O-Ring Dichtung (26, 22) umfassen, die in einer Verjüngung (28) des Leitungsabschnitts (18) und/oder entsprechend in einer Verjüngung (24) des Injektorabschnitts (14) angeordnet ist.

10. Verbindungsvorrichtung (6) gemäß einem der vorhergehenden Ansprüche, in der die Leitung (8) einen in Richtung der konvexen Endfläche (9) zunehmenden Innendurchmesser aufweist.

## Revendications

1. Dispositif d'accouplement (6) destiné à raccorder un injecteur (2) à une alimentation en fluide (4), comprenant
- un tube (8) qui communique avec l'alimentation en fluide (4) et qui présente une face terminale convexe (9),
- un raccord (12) qui possède une section côté tube (18), une section centrale (16) et une section côté injecteur (14), destinée à raccorder le raccord (12) à l'injecteur (2), la section côté tube (18) étant disposée dans le tube (8), la section côté injecteur (14) faisant face dans la direction qui s'éloigne de la section côté tube (18) et la section centrale (16) présentant une surface convexe qui forme un accouplement sphère-sphère avec la face terminale convexe (9) de l'alimentation en fluide (4).

2. Dispositif d'accouplement (6) selon la revendication 1, comprenant un dispositif de montage qui est fixé au tube (8) et qui est couplé axialement à la section centrale (16) et, de cette façon, la section centrale (16) est pressée axialement contre la face terminale convexe (9) du tube (8) par le dispositif de montage.

3. Dispositif d'accouplement (6) selon la revendication 2, dans lequel le dispositif de montage comprend un corps d'accouplement ayant une partie latérale et une partie basse, la partie latérale présente un évidement destiné à recevoir intérieurement la section centrale (16) du raccord (12) et la face terminale convexe (9) du tube (8), et la partie basse présente un évidement à travers lequel la section côté injecteur (14) du raccord (12) émerge.

4. Dispositif d'accouplement ( 6) selon la revendication 3, dans lequel le corps d'accouplement comprend un écrou d'accouplement (32), le tube (8) présente un filetage correspondant pour l'écrou d'accouplement (32) et l'écrou d'accouplement (32) est vissé sur le tube (8) au niveau du filetage du tube (8).

5. Dispositif d'accouplement (6) selon une des revendications 2 à 4, dans lequel le dispositif de montage comprend un corps élastique qui est couplé axialement à la partie basse du corps d'accouplement, à une première extrémité axiale du corps élastique, et qui est couplé axialement à la section centrale (16) du raccord (12) à une deuxième extrémité axiale du corps élastique.

6. Dispositif d'accouplement (6) selon la revendication 5, dans lequel le corps élastique comprend un ressort (30).

7. Dispositif d'accouplement (6) selon une des revendications 3 à 6, comprenant un tube (34) qui reçoit intérieurement une section axiale du corps d'accouplement et une section axiale du tube (8) et qui est couplé au corps d'accouplement et à la section axiale du tube (8) par un ajustement à force.

8. Dispositif d'accouplement (6) selon une des revendications précédentes, dans lequel le tube (8) présente une gorge circonférentielle (38).

9. Dispositif d'accouplement (6) selon une des revendications précédentes, dans lequel la section côté tube (18) et/ou la section côté injecteur (14) comprend ou comprennent une bague torique (26, 22) qui est agencée dans une diminution (28) de la section côté tube (18) et/ou, respectivement, qui est agencée dans une diminution (24) de la section côté injecteur (14).

10. Dispositif d'accouplement (6) selon une des revendications précédentes, dans lequel le tube (8) présente un diamètre intérieur qui croît vers la surface terminale convexe (9)
